# EUROPEAN PATENT APPLICATION

(11) **EP 2 413 232 A2**
(43) Date of publication of application: **01.02.2012**
(21) Application number: 11175479.2
(22) Date of filing: 27.07.2011
(51) Int. Cl.: G06F 3/048

(54) **Character Input Device**

(30) Priority: 28.07.2010 JP 2010169524
(71) Applicant: Funai Electric Co., Ltd., Daito-shi, Osaka 574-0013 (JP)
(72) Inventor: Tomoda, Takahito, Daito-shi, Osaka 574-0013 (JP)
(74) Representative: Grünecker, Kinkeldey, Stockmair & Schwanhäusser

(57) **Abstract**

A character input device (100) according to the present invention includes a control portion (51). When users' finger or a touch panel operating portion (101) slides on a touch panel (11) with the users' finger or the touch panel operating portion being in contact with the touch panel, one of data items in a data entry image is selected in accordance with the slide movement. After the slide movement, when the users' finger or the touch panel operating portion is moved out of contact with the touch panel, the control portion determines the data entry of one of data items selected in accordance with the slide movement in another data entry image.

## Description

### BACKGROUND OF THE INVENTION

### Field of the Invention

The present invention relates to a character input device, and more particularly to a character input device including a touch panel.

### Description of the Background Art

Conventional character input devices including a touch panel have been disclosed. For example, Japanese Patent Laying-Open No. 2005-182487 discloses this type of character input device.

Japanese Patent Laying-Open No. 2005-182487 discloses a character input device including a display portion that displays a data entry image, and a touch panel that is laminated on the display portion and receives user input in accordance with a touch of users' finger, a touch pen or the like on the data entry image. This character input device shows characters such as hiragana characters on the display portion. When users' finger, a touch pen or the like touches (contacts) one of a hiragana character set (touch panel) displayed on the display portion, this character input device detects the touched hiragana character. Users thus enter hiragana characters one by one by touching the touch panel when forming a sentence.

However, since the character input device disclosed in Japanese Patent Laying-Open No. 2005-182487 requires for users to enter characters one by one by touching the touch panel, this character input device has a disadvantage that the number of touches increases as the sentence or word to be entered gets longer, for example. For this reason, there is a problem that input operation such as character entry is poor in convenience and operability.

### SUMMARY OF THE INVENTION

The present invention is aimed at solving the above problem, and it is one object of the present invention to provide a character input device capable of improving convenience and operability of input operation such as character entry.

A character input device according to an aspect of the present invention includes a display portion, a touch panel, and a control portion. The display portion displays a data entry image. The touch panel receives user input when the data entry image is displayed on the display portion. The control portion displays another data entry image in the area where the data entry image has been displayed, when a data code in the data entry image is selected by a touch as user input on the touch panel of users' finger or a touch panel operating portion, which comes in contact with the data code in the data entry image. The another data entry image relates to the data code selected by user input. In addition, when the users' finger or the touch panel operating portion slides on the touch panel with the users' finger or the touch panel operating portion being in contact with the touch panel, a data item in the another data entry image relating to the data code selected by user input is selected in accordance with the slide movement. Also, after the slide movement, when the users' finger or the touch panel operating portion is moved out of contact with the touch panel, the control portion determines the data entry of the selected data item in the another data entry image relating to the data code selected by user input.

In the thus-constructed character input device of the aspect of the present invention, when the users' finger or the touch panel operating portion slides on the touch panel with the users' finger or the touch panel operating portion being in contact with the touch panel, the control portion selects a data item in the another data entry image relating to the data code selected by user input in accordance with the slide movement as user input. After the slide movement, when the users' finger or the touch panel operating portion is moved out of contact with the touch panel, the control portion determines the data entry of the selected data item in the another data entry image relating to the data code selected by user input. Thus, a single touch (single contact operation) allows users to select a data code (e.g., alphabets) in a data entry image, and determine the data entry of a data item (e.g., words) relating to the data code. Accordingly, dissimilar to the case where each character is entered by a single touch, it is possible to reduce the number of touches of the users' finger or the touch panel operating portion on the touch panel for character entry. Since the number of touches of the users' finger or the touch panel operating portion on the touch panel is reduced, it is possible to correspondingly improve convenience and operability of input operation such as character entry.

In the aforementioned character input device according to the aspect, the data entry images displayed on the display portion preferably include first and second data entry images. The first data entry image shows a virtual keyboard used for user character input. The second data entry image shows predicted conversion candidates relating to one of the keys of the virtual keyboard in the first data entry image selected by user input. In addition, when the users' finger or the touch panel operating portion slides on the touch panel with the users' finger or the touch panel operating portion being in contact with the touch panel, the control portion selects one of the predicted conversion candidates in the second data entry image in accordance with the slide movement. Also, after the slide movement, when the users' finger or the touch panel operating portion is moved out of contact with the touch panel, the control portion determines the data entry of the selected one of the predicted conversion candidates in the second data entry image. According to the thus-constructed character input device, since a single touch (single contact operation) allows users to select one of the keys in a first data entry image and determine the data entry of one of the predicted conversion candidates (e.g., words) in the second data entry relating to the one of the keys, it is possible to reduce the number of touches of the users' finger or the touch panel operating portion on the touch panel for character entry.

In this construction, when the users' finger or the touch panel operating portion slides on the touch panel with the users' finger or the touch panel operating portion being in contact with the touch panel, one of the keys of the virtual keyboard in the first data entry image is selected in accordance with the slide movement. After this selection, the control portion closes the first data entry image and displays the second data entry image in the area where the first data entry image has been displayed. According to the thus-constructed character input device, dissimilar to the case where both the virtual keyboard as the first data entry image and the second data entry image are displayed on the display portion, the second data entry image can be large in size when displayed on the display portion.

In the aforementioned character input device including the first and second data entry images, the second data entry image is preferably displayed in a circular or ellipse shape. In addition, each of the predicted conversion candidates relating to one of the keys of the virtual keyboard in the first data entry image selected by user input is shown in corresponding one of a plurality of divided parts of the circular-shaped or ellipse-shaped second data entry image. According to the thus-constructed character input device, the predicted conversion candidates relating to one of the keys of the virtual keyboard in the first data entry image selected by user input can be easily arranged in the divided parts of the circular-shaped or ellipse-shaped second data entry image.

In this construction, it is preferable that a part in the vicinity of the center of the circular-shaped or ellipse-shaped second data entry image shows one of the keys of the virtual keyboard in the first data entry image selected by user input. In addition, each of the predicted conversion candidates relating to the one of the keys of the virtual keyboard in the first data entry image selected by user input is shown in corresponding one of the plurality of divided parts, which are arranged on the outer periphery of the part in the vicinity of the center of the circular-shaped or ellipse-shaped second data entry image where the one of the keys of the virtual keyboard is displayed. According to the thus-constructed character input device, when the second data entry image is displayed, the distances can be substantially equal between the selected key of the virtual keyboard, which is displayed in the part in the vicinity of the center of the circular-shaped or ellipse-shaped second data entry image, and the prediction conversion candidates displayed on the outer periphery of the selected key.

In the aforementioned character input device including the first and second data entry images, when the second data entry image is displayed on the display portion, it is preferable that a pointer for selecting one of the predicted conversion candidates in the second data entry image be displayed on the display portion by the control portion. According to the thus-constructed character input device, the pointer allows users to easily see the direction of the users' finger or the touch panel operating portion to be moved for selecting one of the predicted conversion candidates in the second data entry image.

In the aforementioned character input device including the first and second data entry images, when one of the keys of the virtual keyboard in the first data entry image is selected by user input, or when one of the predicted conversion candidates in the second data entry image relating to one of the keys of the virtual keyboard on the first data entry image is selected by user input, the display portion preferably displays, in an output screen, the one of the keys or the predicted conversion candidates selected by user input. According to the thus-constructed character input device, users can easily see, in the output screen, the one of the keys or the predicted conversion candidates selected by user input in the first or second data entry image.

In the aforementioned character input device including the first and second data entry images, the second data entry image preferably includes a first selection image that shows predicted conversion candidates relating to one of the keys of the virtual keyboard in the first data entry image selected by user input, and a second selection image that shows predicted conversion candidates relating to one of the predicted conversion candidates in the first selection image selected by user input. In addition, when the users' finger or the touch panel operating portion slides on the touch panel with the users' finger or the touch panel operating portion being in contact with the touch panel, in the first selection image, one of the predicted conversion candidates is selected in accordance with the slide movement. In addition, after this selection, the control portion switches the display from the first selection image to the second selection image. According to the thus-constructed character input device, dissimilar to the case where both the first and second selection images are displayed on the display portion, each of the first and second selection images can be large in size when displayed on the display portion.

In this construction, the second selection image preferably shows, in addition to the predicted conversion candidates relating to one of the predicted conversion candidates in the first selection image selected by user input, a continuous user character input selection alternative that provides continuous user character input. In addition, when the users' finger or the touch panel operating portion slides on the touch panel with the users' finger or the touch panel operating portion being in contact with the touch panel, in the second selection image, the control portion allows user input to select one of the predicted conversion candidates relating to one of the predicted conversion candidates in the first selection image or the continuous user character input selection alternative. According to the thus-constructed character input device, even if the predicted conversion candidates displayed in the second selection image do not include a word which a user intends to enter, since the user can select the continuous user character input selection alternative, this character input device facilitates the data entry of a word other than these predicted conversion candidates.

In the aforementioned character input device including the second selection image, which shows the continuous user character input selection alternative in addition to the predicted conversion candidates, when the users' finger or the touch panel operating portion slides on the touch panel with the users' finger or the touch panel operating portion being in contact with the touch panel, in the first selection image of the second data entry image, one of the predicted conversion candidates is selected in accordance with the slide movement, in addition, after this selection, if the users' finger or the touch panel operating portion slides on the touch panel with the users' finger or the touch panel operating portion being in contact with the touch panel, when the continuous user character input selection alternative is then selected in accordance with the slide movement as user input, it is preferable that the control portion display the virtual keyboard of the first data entry image again on the display portion with the data entry of the selected one of the predicted conversion candidates in the first selection image of the second data entry image being temporarily determined. According to the thus⁻constructed character input device, after the one of the predicted conversion candidates in the second data entry image is temporarily determined, users can enter an additional (next) character following the temporarily determined one of the prediction conversion candidates.

In this construction, after one of the prediction conversion candidates in the first selection image of the second data entry image is selected, when the continuous user character input selection alternative in the second selection image is then selected, it is preferable that the control portion close the display of the prediction conversion candidates in the second data entry image, and then display the virtual keyboard of the first data entry image again in the area where the second data entry image has been displayed. According to the thus-constructed character input device, dissimilar to the case where both the prediction conversion candidates in the second data entry image and the virtual keyboard of the first data entry image are displayed on the display portion, the virtual keyboard can be large in size when displayed on the display portion.

In the aforementioned character input device including the first and second data entry images, when the users' finger or the touch panel operating portion is in continuous contact for a predetermined time period with one of the keys of the virtual keyboard in the first data entry image or a part corresponding to one of the prediction conversion candidates in the second data entry image on the touch panel, it is preferable that the control portion determine that the one of the keys of the virtual keyboard in the first data entry image or the one of the prediction conversion candidates in the second data entry image is selected by user input. According to the thus-constructed character input device, for example, in the slide movement in which the users' finger or the touch panel operating portion slides on the touch panel, even if the users' finger or the touch panel operating portion comes in momentary contact with a key of the virtual keyboard or a part corresponding to a prediction conversion candidate in the touch panel, it is possible to suppress a selection error in which the control portion wrongly determines that a user selects the key or prediction conversion candidate, which comes in momentary contact with the users' finger or the touch panel operating portion.

In the aforementioned character input device including the first and second data entry images, the control portion preferably highlights one or more of the prediction conversion candidates displayed in the second data entry image in accordance with the priorities of the prediction conversion candidates. According to the thus-constructed character input device, for example, in the case where a higher priority prediction conversion candidate is highlighted, users can easily find the higher priority prediction conversion candidate.

In this construction, the control portion preferably displays the highlighted one or more of the prediction conversion candidates in at least one of different character size and different font from other of the prediction conversion candidates displayed in the second data entry image in accordance with the priorities of the prediction conversion candidates. According to the thus-constructed character input device, since a higher priority prediction conversion candidate can be highlighted, users can visually easily identify the higher priority prediction conversion candidate.

In the aforementioned character input device according to the aspect, the touch panel operating portion preferably includes a touch pen. Users can select a data code in the data entry image by a touch of the touch pen on the touch panel. According to the thus-constructed character input device, the touch pen allows users to easily select a data code in the data entry image.

### BRIEF DESCRIPTION OF THE DRAWINGS

Fig. 1 is a plan view showing a mobile phone according to an embodiment of the present invention;
Fig. 2 is a view schematically showing the construction of the mobile phone according to the embodiment of the present invention;
Fig. 3 is a flowchart illustrating control operation of a control portion of the mobile phone according to the embodiment of the present invention;
Fig. 4 is a flowchart illustrating the control operation of the control portion of the mobile phone according to the embodiment of the present invention;
Fig. 5 is a diagram showing a virtual keyboard displayed on a display portion of the mobile phone according to the embodiment of the present invention;
Fig. 6 is a diagram illustrating character entry operation using the character keys of the virtual keyboard displayed on the display portion of the mobile phone according to the embodiment of the present invention;
Fig. 7 is a diagram illustrating character entry determining operation using the character keys of the virtual keyboard displayed on the display portion of the mobile phone according to the embodiment of the present invention;
Fig. 8 is a diagram showing a character candidate image displayed on the display portion of the mobile phone according to the embodiment of the present invention;
Fig. 9 is a diagram illustrating character candidate selecting operation in the character candidate image displayed on the display portion of the mobile phone according to the embodiment of the present invention;
Fig. 10 is a diagram illustrating the character candidate selecting operation in the character candidate image displayed on the display portion of the mobile phone according to the embodiment of the present invention;
Fig. 11 is a diagram illustrating character candidate entry determining operation in the character candidate image displayed on the display portion of the mobile phone according to the embodiment of the present invention;
Fig. 12 is a diagram showing a conversion candidate image displayed on the display portion of the mobile phone according to the embodiment of the present invention;
Fig. 13 is a diagram illustrating the conversion candidate selecting operation in the conversion candidate image displayed on the display portion of the mobile phone according to the embodiment of the present invention;
Fig. 14 is a diagram illustrating the conversion candidate selecting operation in the conversion candidate image displayed on the display portion of the mobile phone according to the embodiment of the present invention;
Fig. 15 is a diagram illustrating conversion candidate entry determining operation in the conversion candidate image displayed on the display portion of the mobile phone according to the embodiment of the present invention;
Fig. 16 is a diagram illustrating "Continue Entry" selecting operation in the conversion candidate image displayed on the display portion of the mobile phone according to the embodiment of the present invention;
Fig. 17 is a diagram illustrating the "Continue Entry" selecting operation in the conversion candidate image displayed on the display portion of the mobile phone according to the embodiment of the present invention;
Fig. 18 is a diagram illustrating the "Continue Entry" selecting operation in the conversion candidate image displayed on the display portion of the mobile phone according to the embodiment of the present invention;
Fig. 19 is a diagram illustrating "Continue Entry" determining operation in the conversion candidate image displayed on the display portion of the mobile phone according to the embodiment of the present invention;
Fig. 20 is a diagram showing a first modified character candidate image displayed on the display portion of the mobile phone according to the embodiment of the present invention;
Fig. 21 is a diagram showing a modified conversion candidate image displayed on the display portion of the mobile phone according to the embodiment of the present invention; and
Fig. 22 is a diagram showing a second modified character candidate image displayed on the display portion of the mobile phone according to the embodiment of the present invention.

### DESCRIPTION OF THE PREFERRED EMBODIMENTS

The following description will describe embodiments according to the present invention with reference to the drawings.

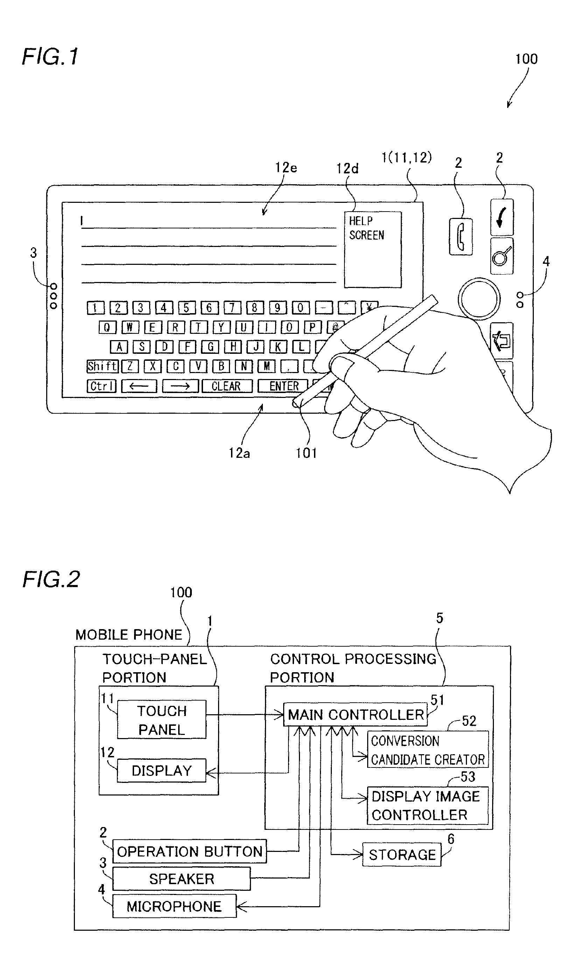

The construction of a mobile phone 100 according to one embodiment of the present invention is now described with reference to Figs. 1 and 2. The mobile phone 100 serves as an exemplary "character input device" or "portable device" according to the present invention.

The mobile phone 100 according to the embodiment of the present invention includes a touch-panel portion 1, a plurality of operation buttons 2 for various types of operation of the phone, a speaker 3 for voice output, and a microphone 4 for voice input, as shown in Fig. 1.

The touch-panel portion 1 includes a touch panel 11 and a display portion 12. The touch panel 11 receives input touches through users' finger or a touch pen 101. The display portion 12 is arranged on the lower surface side of the touch panel 11, and is composed of a liquid crystal panel or the like. The touch pen 101 serves as an exemplary "touch panel operating portion" according to the present invention. Examples of the touch panel 11 can be provided by a resistive film touch panel, which detects input touches based on resistance change when touched by users, a capacitive touch panel, which detects input touches based on capacitance change when touched by users, and the like.

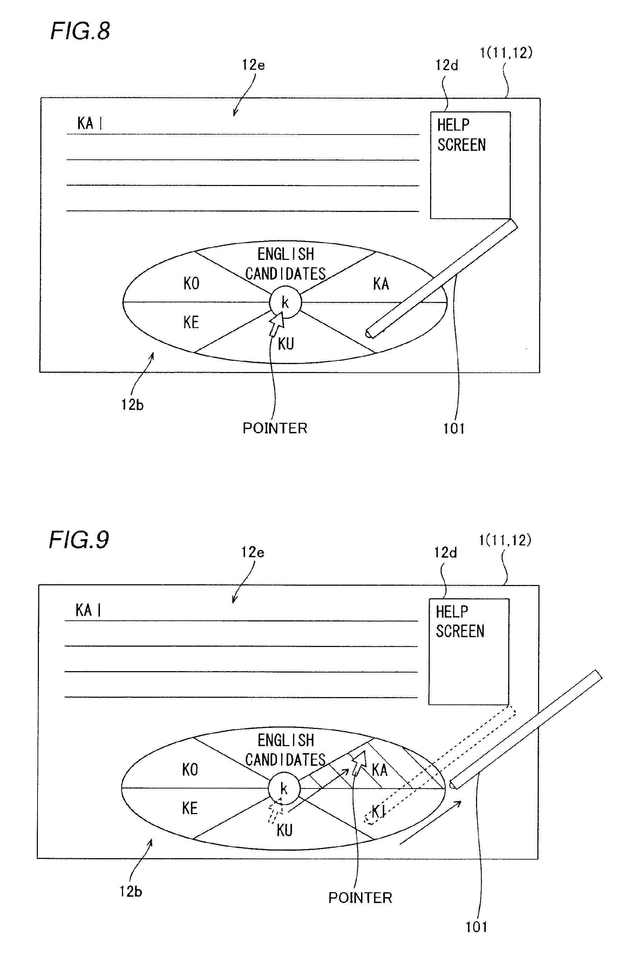

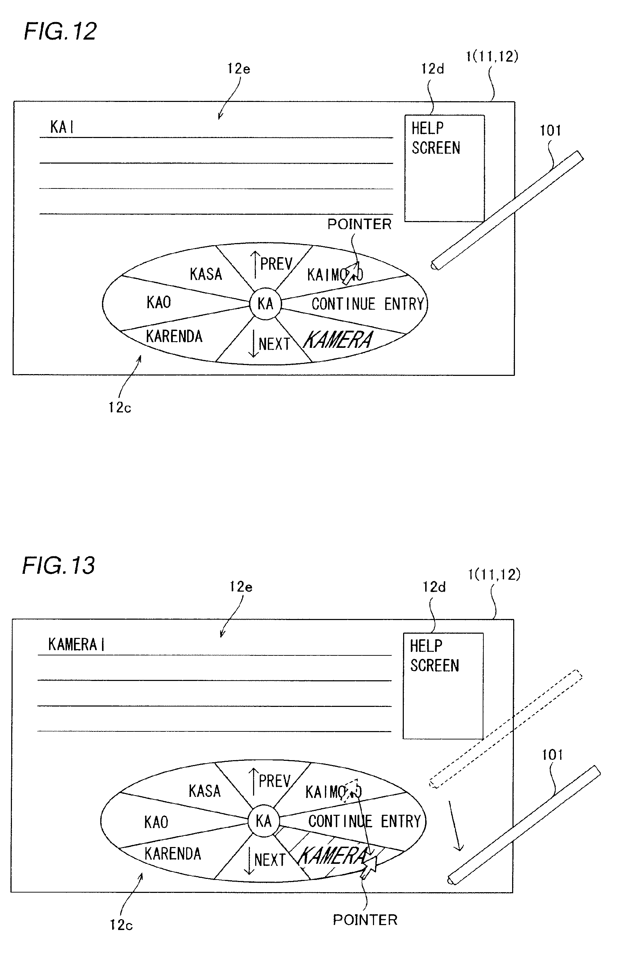

The display portion 12 can display a virtual keyboard (software keyboard) 12a that indicates numerals "1" to "0", alphabets "A" to "Z", and the like. The display portion 12 can display a later-discussed, ellipse-shaped character candidate image 12b (see Fig. 8), and a later-discussed, ellipse-shaped conversion candidate image 12c (see Fig. 12). The character candidate image 12b indicates character candidates relating to one of the keys of the virtual keyboard 12a, which is selected by user input. The conversion candidate image 12c shows conversion candidates relating to one of characters in character candidate image 12b, which is selected by user input. In addition, the display portion 12 can display a Help screen 12d for guidance and the like, and a body sheet 12e that shows numerals, characters or the like, which are selected/determined by user input. The virtual keyboard 12a serves as an exemplary "first data entry image" according to the present invention. The character candidate image 12b serves as an exemplary "second data entry image" and an exemplary "first selection image" according to the present invention. The conversion candidate image 12c serves as an exemplary "second data entry image", and an exemplary "second selection image" according to the present invention. Also, the body sheet 12e serves as an exemplary "output screen" according to the present invention.

Also, as shown in Fig. 2, the mobile phone 100 includes a control processing portion 5, and a storage portion 6. The storage portion 6 stores information on images such as the virtual keyboard 12a and the character candidate image 12b. The control processing portion 5 includes a main control portion 51, a conversion candidate creating portion 52, and a display image control portion 53. The main control portion 51 controls the entire operation of the mobile phone 100. The conversion candidate creating portion 52 creates the conversion candidates relating to one of characters selected by user input. The display image control portion 53 controls an image to be displayed on the display portion 12 such as the virtual keyboard 12a, the character candidate image 12b, and the conversion candidate image 12c. The main control portion 51 serves as an exemplary "control portion" according to the present invention.

When users enter one of the keys of the virtual keyboard 12a (displayed on the touch panel 11), the main control portion 51 receives an input signal from the touch panel 11. The main control portion 51 provides the signal from the touch panel 11 to the display image control portion 53. Then, the main control portion 51 reads, from the storage portion 6, a signal of the character candidate image 12b corresponding to the signal from the touch panel 11. Subsequently, the main control portion 51 displays the character candidate image 12b on the display portion 12 based on the signal provided from the display image control portion 53, and the signal of the character candidate image 12b.

When users select/determine one of the character candidates in the character candidate image 12b (displayed on the touch panel 11), the main control portion 51 receives an input signal from the touch panel 11. The main control portion 51 provides the signal from the touch panel 11 to the conversion candidate creating portion 52 and the display image control portion 53. Subsequently, the main control portion 51 displays the conversion candidate image 12c on the display portion 12 based on the conversion candidates created by the conversion candidate creating portion 52, and a control signal provided from the display image control portion 53.

When users click one of the operation buttons 2, the main control portion 51 receives an input signal in accordance with on the click of the operation button 2. Also, the main control portion 51 provides the speaker 3 with a signal for voice output. Also, the main control portion 51 receives a signal provided from the microphone 4.

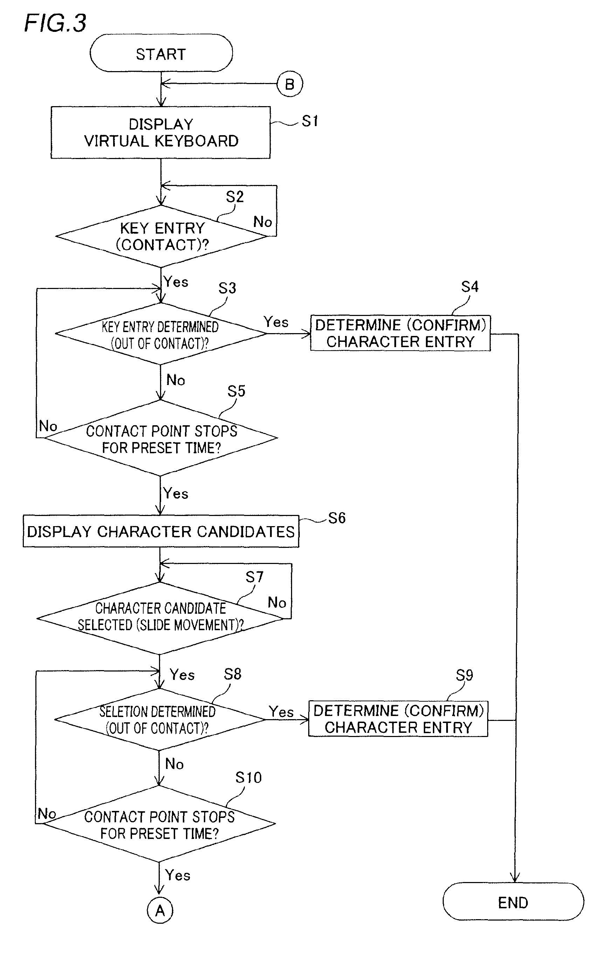

The control operation of the main control portion 51 is now described which displays the character candidate image 12b and the conversion candidate image 12c with reference to Figs. 3 to 19.

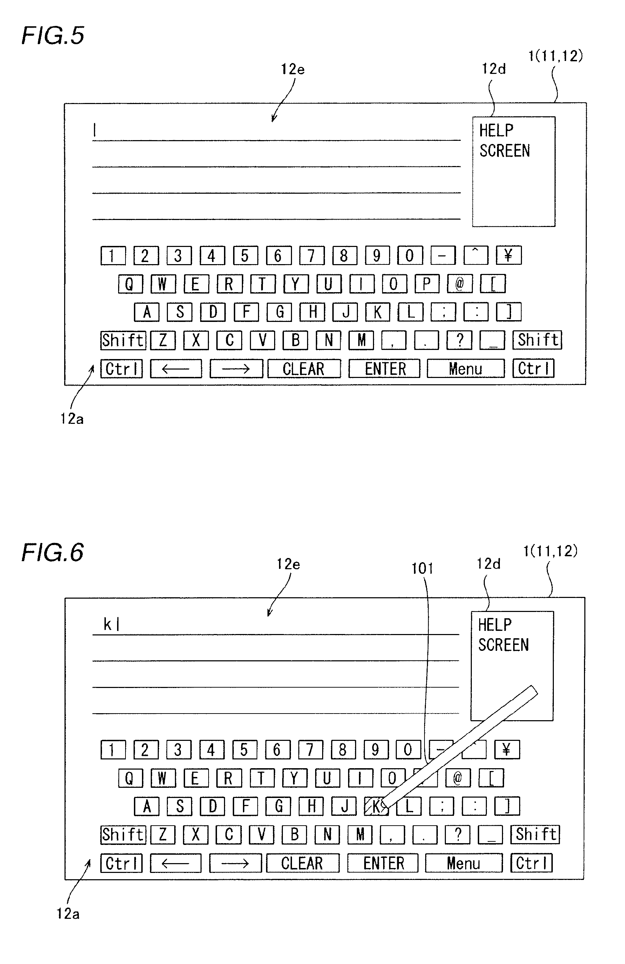

In Step S1 in Fig. 3, the virtual keyboard (software keyboard) 12a is first displayed on a lower half area of the display portion, which is located under the body sheet 12e, as shown in Fig. 5. The procedure goes to Step S2.

Subsequently, in Step S2 in Fig. 3, it is determined whether one of the keys of the virtual keyboard 12a is entered by user input (contact) until any of the keys is entered. In other words, in Step S2, it is determined whether users' finger, touch pen 101 or the like touches (comes in contact with) one of displayed parts corresponding to the numerals "1" to "0", the alphabets "A" to "Z", and the like of the virtual keyboard 12a. In Step S2, if it is determined that one of the keys of the virtual keyboard 12a is entered by user input (contact), the procedure goes to Step S3. The control operation according to this embodiment will be described in the case where a user enters (touches) "k" of the virtual keyboard 12a through the touch pen 101, as shown in Fig. 6. In this case, the character "k" will be displayed in the body sheet 12e.

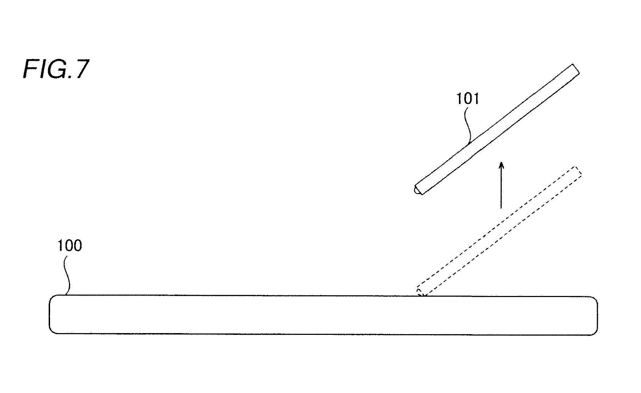

Subsequently, in Step S3, it is determined whether data entry of the character (k) is determined (whether the touch pen is moved out of contact with the touch panel). In other words, it is determined whether the touch pen 101 is kept in contact with the part corresponding to "k" of the virtual keyboard 12a, or is moved out of contact with the part corresponding to "k" of the virtual keyboard 12a. In Step S3, if the touch pen 101 is moved out of contact with the part corresponding to "k" of the virtual keyboard 12a (the surface of the touch panel 11) as shown in Fig. 7, it is determined that data entry of the character is determined. In this case, the procedure goes to Step S4 as shown in Fig. 3. In Step S4, data entry of the character (k) is determined (confirmed).

On the other hand, if it is not determined in Step S3 that data entry of the character is determined (that the touch pen is moved out of contact with the touch panel), that is, if it is determined that the touch pen 101 is kept in contact with the part corresponding to "k" of the virtual keyboard 12a, the procedure goes to Step S5. In Step S5, it is determined whether the touch pen 101 stops for a predetermined period of time (e.g., not less than about 0.3 second and not more than about 0.5 second) without sliding on the touch panel 11. In other words, it is determined whether the touch pen 101 is kept for the predetermined period of time (not less than about 0.3 second and not more than about 0.5 second) in contact with the part corresponding to "k" of the virtual keyboard 12a (the surface of the touch panel 11). If it is not determined in Step S5 that the touch pen 101 stops for the predetermined period of time (not less than about 0.3 second and not more than about 0.5 second) without sliding on the touch panel, that is, if it is determined that the touch pen 101 slides on the touch panel, the procedure returns to Step S3.

On the other hand, if it is determined in Step S5 that the touch pen 101 stops for the predetermined period of time (not less than about 0.3 second and not more than about 0.5 second) without sliding on the touch panel, it is determined that the character "k" of the virtual keyboard 12a is selected. Subsequently, the procedure goes to Step S6. In Step S6, the virtual keyboard 12a is closed, then the character candidate image 12b is displayed in the area where the virtual keyboard 12a has been displayed as shown in Fig. 8. Accordingly, dissimilar to the case where both the virtual keyboard 12a and the character candidate image 12b are displayed on the display portion 12, the character candidate image 12b can be large in size when displayed on the display portion. Therefore, it is possible to improve convenience in character entry operation. The character candidate image 12b indicates "KA", "KI", "KU", KE", "KO", English words (English candidates), and the like relating to "k", which is entered (touched) in the virtual keyboard 12a by the user. In addition, "k", which is entered (touched) in the virtual keyboard 12a by the user, is indicated in a part in the vicinity of the center of the character candidate image 12b. "KA", "KI", "KU", KE" and "KO", which are hiragana characters, English words (English candidates), and the like relating to "k" are arranged in corresponding divided parts of the character candidate image 12b on the outer periphery of "k", which is indicated in the part in the vicinity of the center of the character candidate image 12b. The character candidate image 12c is divided equally in angle into sector shapes corresponding to the divided peripheral parts of the character candidate image 12b.

In addition, in Step S6, after the character candidate image 12b is displayed, a pointer (arrow) is shown in the character candidate image 12b. When the pointer is located on one of the character candidates in the character candidate image 12b, the one of the character candidates can be selected. It is noted that the position of the pointer does not necessarily agree with and may be deviated from the position of the touch pen 101 in contact with the character candidate image 12b. Even in the case where the position of the pointer is deviated from the position of the touch pen in contact with the character candidate image, when the touch pen 101 slides relative to the character candidate image 12b as shown in Fig. 9, the pointer moves correspondingly to the slide movement of the touch pen 101.

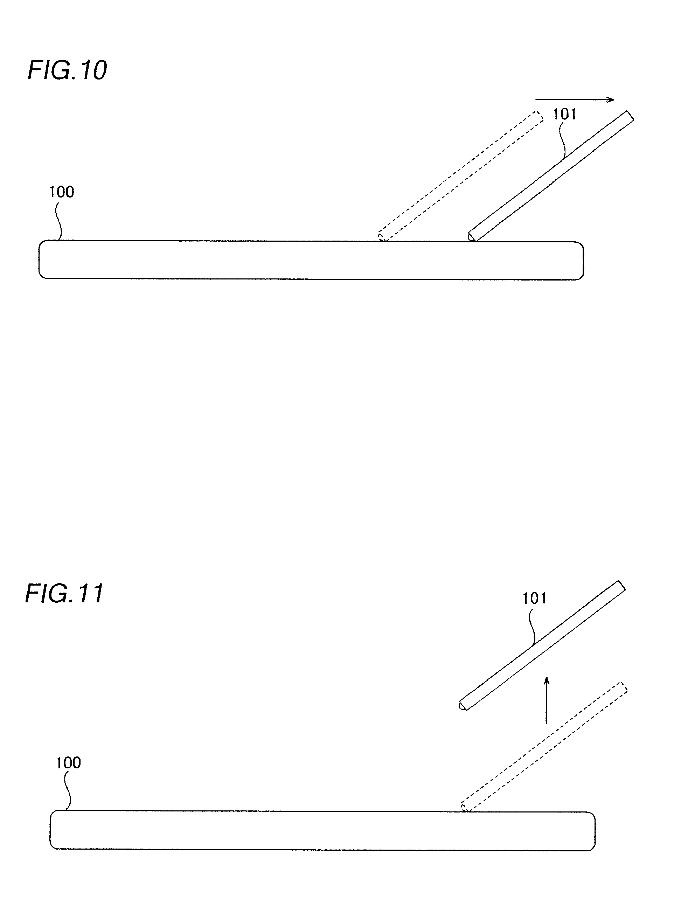

Subsequently, in Step S7 in Fig. 3, it is determined whether one of the character candidates of the character candidate image 12b is selected by the user, that is, whether the touch pen slides. This determination is repeated until it is determined that one of the character candidates is selected, that is, that the touch pen slides. In other words, in this embodiment, if the user moves the touch pen 101 in an upward and rightward direction with the touch pen 101 being in contact with the character candidate image 12b as shown in Figs. 9 and 10, the pointer correspondingly moves to a part of the character candidate image 12b where "KA" is indicated (diagonally shaded area in Fig. 9). In Step S7 in Fig. 3, if it is determined that one of the character candidate ("KA") in the character candidate image 12b is selected, that is, that the touch pen slides so that the pointer correspondingly moves to one of the character candidates ("KA"), the procedure goes to Step S8. Subsequently, in Step S8, it is determined whether data entry of the one of the character candidates ("KA") is determined (whether the touch pen is moved out of contact with the touch panel). Specifically, it is determined whether the touch pen 101 is kept in contact with the part corresponding to "KA" in the character candidate image 12b, or is moved out of contact with the part corresponding to "KA" in the character candidate image 12b.

In this embodiment, in Step S8, if it is determined that the touch pen 101 is moved out of contact with the part corresponding to "KA" in the character candidate image 12b (touch panel 11) as shown in Fig. 11, the procedure goes to Step S9 (see Fig. 3). In Step S9, data entry of the one of the character candidates ("KA") is determined (confirmed).

On the other hand, if it is not determined in Step S8 that data entry of one of the character candidates is determined (that the touch pen is moved out of contact with the touch panel), that is, if it is determined that the touch pen 101 is kept in contact with the part corresponding to one of the character candidates "KA" in the character candidate image 12b, the procedure goes to Step S10. In Step S10, it is determined whether the touch pen 101 stops for a predetermined period of time (not less than about 0.3 second and not more than about 0.5 second) without sliding on the touch panel. In other words, it is determined whether the touch pen 101 is kept for the predetermined period of time (not less than about 0.3 second and not more than about 0.5 second) in contact with the part corresponding to one of the character candidates "KA" in the character candidate image 12b. If it is not determined in Step S10 that the touch pen 101 stops for the predetermined period of time (not less than about 0.3 second and not more than about 0.5 second) without sliding on the touch panel, that is, if it is determined that the touch pen 101 slides on the touch panel, the procedure returns to Step S8.

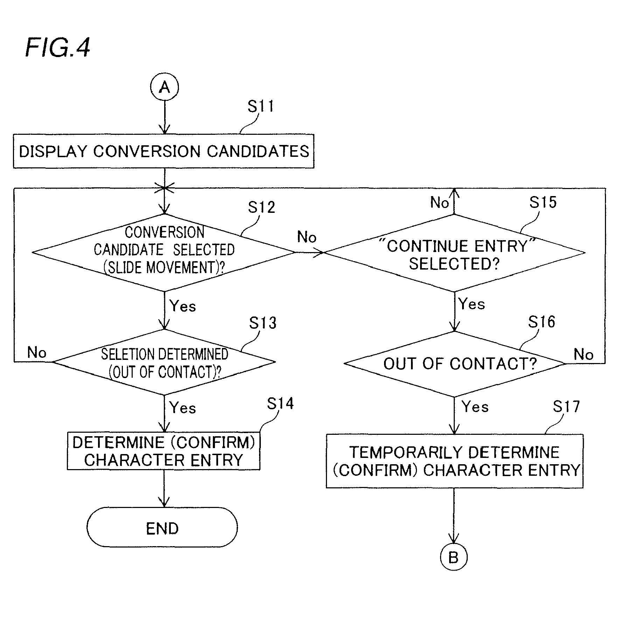

On the other hand, if it is determined in Step S10 that the touch pen 101 stops for the predetermined period of time (not less than about 0.3 second and not more than about 0.5 second) without sliding on the touch panel, it is determined that the one of the character candidates "KA" in the character candidate image 12b is selected. Subsequently, the procedure goes to Step S11 in Fig. 4. In Step S11, the character candidate image 12b is closed, then the conversion candidate image 12c is displayed in the area where the character candidate image 12b has been displayed as shown in Fig. 12. In other words, if it is determined that "KA" in the character candidate image 12b is selected by the user, the display is switched from the character candidate image 12b to the conversion candidate image 12c. The conversion candidate image 12c shows the conversion candidates including words starting with "KA" (e.g., "KAIMONO (shopping)", "KAMERA (camera)", "KARENDA (calendar)", "KAO (face)" and "KASA (umbrella)"), "Continue Entry", "Previous", "Next" and the like. The "Continue Entry" allows the user to enter an additional character following the selected conversion candidate "KA". The "Previous", and "Next" allow the user to switch the display to previous and next conversion candidate sets, respectively. In addition, "KA", which is selected (touched) in the character candidate image 12b by the user, is indicated in a part in the vicinity of the center of the conversion candidate image 12c. Also, the conversion candidates including words starting with "KA" (e.g., "KAIMONO", "KAMERA", "KARENDA", "KAO" and "KASA"), "Continue Entry", "Previous", "Next" and the like are arranged in corresponding divided parts of the conversion candidate image 12c. The conversion candidate image 12c is divided equally in angle into sector shapes corresponding to the divided peripheral parts of the conversion candidate image 12c. The "Continue Entry" allows the user to enter an additional character following the selected conversion candidate "KA". The "Previous" and "Next" allow the user to switch the display to previous and next conversion candidate sets, respectively. Also, in this embodiment, some of the conversion candidates displayed in the conversion candidate image 12c can be highlighted in accordance with their priorities. For example, in the case where the user most frequently enters "KAMERA", the conversion candidate "KAMERA" can be indicated in larger size than the other conversion candidates and in italic font.

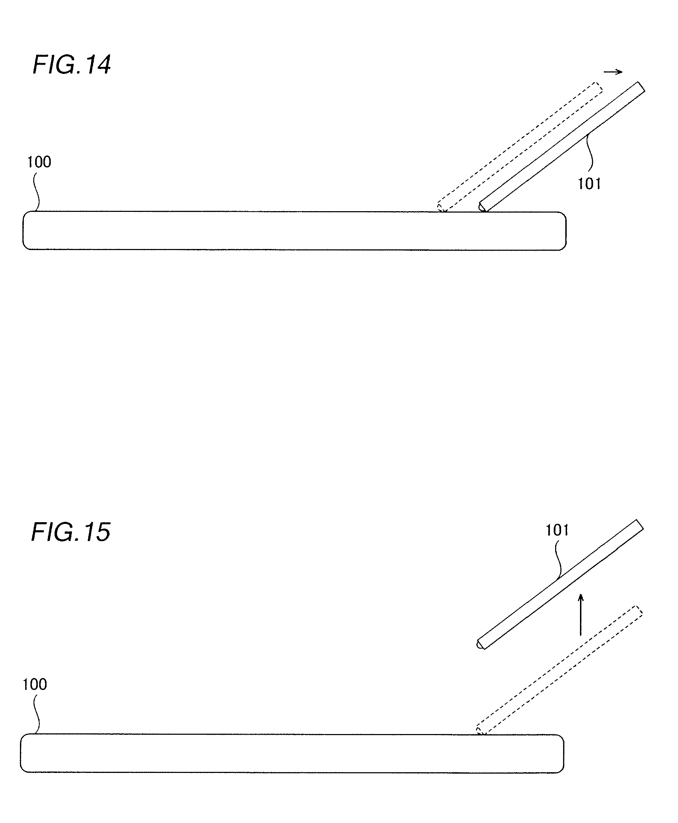

Subsequently, in Step S12 in Fig. 4, it is determined whether one of the conversion candidates in the conversion candidate image 12c is selected, that is, whether the touch pen slides. When the user slides the touch pen 101 relative to the conversion candidate image 12c as shown in Fig. 14 so that the pointer is moved from the conversion candidate "KAIMONO" shown in Fig. 12 to the conversion candidate "KAMERA" shown in Fig. 13, it is determined in Step S12 that selected one of the conversion candidates ("KAMERA") in the conversion candidate image 12c is selected, that is, that the user slides the touch pen so that the pointer is moved to the conversion candidate "KAMERA". Subsequently, the procedure goes to Step S13. In Step S13, it is determined whether data entry of the selected one of the conversion candidates ("KAMERA") is determined (whether the touch pen is moved out of contact with the touch panel). Specifically, it is determined whether the touch pen 101 is kept in contact with the part corresponding to "KAMERA" in the conversion candidate image 12c, or is moved out of contact with the part corresponding to "KAMERA" in the conversion candidate image 12c.

If it is determined in Step S13 in Fig. 4 that the touch pen 101 is moved out of contact with the part corresponding to "KAMERA" in the conversion candidate image 12c (see Fig. 15), data entry of the selected one of the conversion candidates ("KAMERA") is determined (it is determined that the touch pen is moved out of contact with the touch panel). Subsequently, the procedure goes to Step S14. In Step S14, data entry of the selected one of the conversion candidates ("KAMERA") is determined (confirmed). On the other hand, in Step S13, if it is not determined that data entry of the selected one of the conversion candidates ("KAMERA") is determined (that the touch pen is moved out of contact with the touch panel), the procedure returns to Step S12.

If it is not determined in Step S12 that one of the conversion candidates is selected, that is, that the touch pen slides, the procedure goes to Step S15. In Step S15, it is determined whether "Continue Entry" in the conversion candidate image 12c is selected. If it is not determined in Step S15 that "Continue Entry" in the conversion candidate image 12c is selected, the procedure returns to Step S12. If "Previous" or "Next" in the conversion candidate image 12c is selected/determined, the current conversion candidate set in the conversion candidate image 12c is switched to a previous or next conversion candidate set.

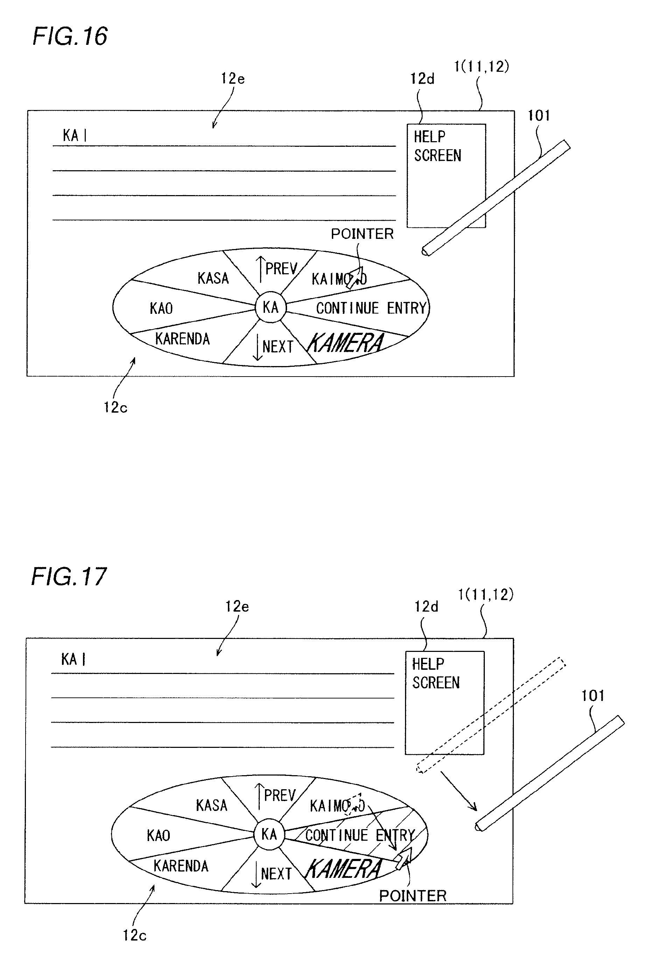

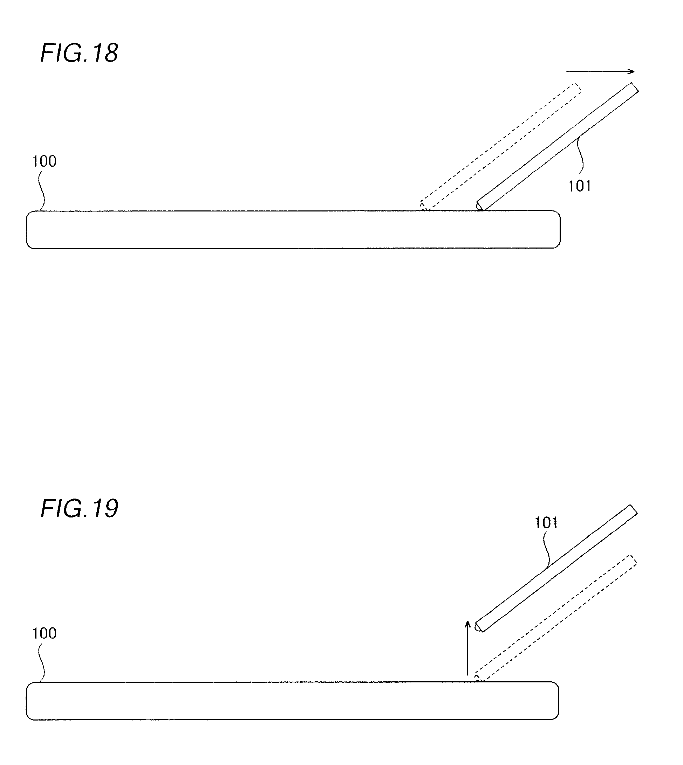

When the user slides the touch pen 101 relative to the conversion candidate image 12c as shown in Fig. 18 so that the pointer is moved from the part corresponding to the conversion candidate ("KAIMONO") shown in Fig. 16 to the part corresponding to "Continue Entry" shown in Fig. 17, it is determined in Step S15 that "Continue Entry" in the conversion candidate image 12c is selected, that is, that the user slides the touch pen so that the pointer is moved to "Continue Entry". Subsequently, the procedure goes to Step S16. In Step S16, it is determined whether data entry of "Continue Entry" is determined (whether the touch pen is moved out of contact with the touch panel). Specifically, it is determined whether the touch pen 101 is kept in contact with the part corresponding to "Continue Entry" in the conversion candidate image 12c, or is moved out of contact with the part corresponding to "Continue Entry" in the conversion candidate image 12c.

If it is not determined in Step S16 that the touch pen 101 is moved out of contact with the part corresponding to "Continue Entry" in the conversion candidate image 12c, that is, if it is determined that the touch pen 101 slides, the procedure returns to Step S12.

In this embodiment, in Step S16, if it is determined that the touch pen 101 is moved out of contact with the part corresponding to "Continue Entry" in the conversion candidate image 12c as shown in Fig. 19, the procedure goes to Step S17. In Step S17, the one of the character candidates ("KA"), which is selected in the character candidate image 12b, is temporarily determined (temporarily confirmed). Subsequently, the procedure returns to Step S1. The conversion candidate image 12c is closed, and then the virtual keyboard 12a is displayed again in the area where the conversion candidate image 12c has been displayed. After that, the user can enter an additional character following the temporarily determined character "KA". For example, in the case where the user enters "s" of the virtual keyboard 12a, the display portion 12 will display the character candidate image, which includes words including "KASA", "KASHI", "KASU", "KASE", "KASO" or the like. Here, "KASA", "KASHI", "KASU", "KASE", and "KASO" includes a first hiragana character of "KA" and include a second hiragana character staring with the alphabet character "s".

In this embodiment, as discussed above, when the touch pen 101 slides on the touch panel 11 with the touch pen 101 being in contact with the touch panel 11, one of data items ("KAMERA") in the conversion candidate image 12c relating to one of data codes ("k") selected by user input is selected in accordance with the slide movement, and after the slide movement, when the touch pen 101 is moved out of contact with the touch panel 11, the main control portion 51 determines the data entry of the selected one of data items ("KAMERA") in the conversion candidate image 12c relating to the one of data codes ("k") selected by user input. According to this construction, a single touch (single contact operation) allows the user to select (enter) one of the keys ("k") of the virtual keyboard 12a, and determine the data entry of one of data items ("KAMERA") in the conversion candidate image 12c relating to the selected one of the keys ("k"). Accordingly, dissimilar to the case where each character is entered by a single touch of the touch pen on the touch panel 11, it is possible to reduce the number of touches of the touch pen on the touch panel 11 for character entry. Since the number of touches of the touch pen on the touch panel 11 is reduced, it is possible to correspondingly improve convenience and operability of input operation such as character entry.

Also, in this embodiment, as discussed above, when the touch pen 101 slides on the touch panel 11 with the touch pen 101 being in contact with the touch panel 11, one of data items ("KAMERA") in the conversion candidate image 12c is selected in accordance with the slide movement, and after the slide movement, when the touch pen 101 is moved out of contact with the touch panel 11, the data entry of the selected one of data items ("KAMERA") in the conversion candidate image 12c is determined. According to this construction, since a single touch (single contact operation) allows the user to select one of the keys ("k") of the virtual keyboard 12a and determine the data entry of one of data items ("KAMERA") in the conversion candidate image 12, it is possible to reduce the number of touches of the touch pen on the touch panel 11 for character entry.

Also, in this embodiment, as discussed above, when the touch pen 101 slides on the touch panel 11 with the touch pen 101 being in contact with the touch panel 11, one of the keys of the virtual keyboard 12a is selected in accordance with the slide movement. After this selection, the virtual keyboard 12a is closed, and then the character candidate image 12b is displayed in the area where the virtual keyboard 12a has been displayed. Accordingly, dissimilar to the case where both the virtual keyboard 12a and the character candidate image 12b are displayed on the display portion 12, the character candidate image 12b can be large in size when displayed on the display portion.

Also, in this embodiment, as discussed above, each of predicted conversion candidates relating to one of the keys ("k") in the virtual keyboard 12a selected by user input is shown in corresponding one of a plurality of divided parts of the ellipse-shaped character candidate image 12b. Accordingly, the character candidates relating to one of the keys ("k") of the virtual keyboard 12a selected by the user can be easily arranged in the divided parts of the ellipse-shaped character candidate image.

Also, in this embodiment, as discussed above, each of character candidates ("KA, KI, KU, KE, KO") and the like relating to the one of the keys ("k") in the virtual keyboard 12a selected by user input is shown in corresponding one of the plurality of divided parts, which are arranged on the outer periphery of a part in the vicinity of the center of the ellipse-shaped character candidate image 12b where the one of the keys ("k") in the virtual keyboard 12a is indicated. Accordingly, when the character candidate image 12b is displayed, the distances can be substantially equal between the selected key ("k") of the virtual keyboard 12a, which is indicated in the part in the vicinity of the center of the ellipse-shaped character candidate image 12b, and the character candidates ("KA, KI, KU, KE, KO") displayed on the outer periphery of the selected key ("k").

Also, in this embodiment, as discussed above, when the character candidate image 12b is displayed on the display portion 12, the pointer for selecting one of the character candidates in the character candidate image 12b is displayed on the display portion 12. Accordingly, the pointer allows the user to easily see the direction of the touch pen 101 to be moved for selecting one of the character candidates in the character candidate image 12b.

Also, in this embodiment, as discussed above, when one of the keys ("k") of the virtual keyboard 12a is selected by user input, or when one of character candidates in the character candidate image 12b is selected by user input, the display portion 12 displays the selected data code ("k") selected by user input in the body sheet 12e. Accordingly, the user can easily see the selected data code ("k") selected by user input in the body sheet 12e.

Also, in this embodiment, as discussed above, when the touch pen 101 slides on the touch panel 11 with the touch pen 101 being in contact with the touch panel 11, one of the character candidates in the character candidate image 12b is selected in accordance with the slide movement. In addition, after this selection, the display is switched from the character candidate image 12b to the conversion candidate image 12c. Accordingly, dissimilar to the case where both the character candidate image 12b and the conversion candidate image 12c are displayed on the display portion 12, each of the character candidate image 12b and the conversion candidate image 12c can be large in size when displayed on the display portion.

Also, in this embodiment, as discussed above, when the touch pen 101 slides on the touch panel with the touch pen 101 being in contact with the touch panel 11, the user can select the continuous user character input selection alternative in the conversion candidate image 12c. Accordingly, even if conversion candidates displayed in the conversion candidate image 12c do not include a word which the user intends to enter, since the user can select the continuous user character input selection alternative, this construction facilitates the enter of a word other than the conversion candidates.

Also, in this embodiment, as discussed above, after one of the character candidates ("KA") in the character candidate image 12b is selected in accordance with slide movement of the touch pen 101 on the touch panel 11 with the touch pen 101 being in contact with the touch panel 11, when continuous user character input is then selected in accordance with user slide movement of the touch pen 101 slides on the touch panel 11 with the touch pen 101 being in contact with the touch panel 11, the virtual keyboard 12a is displayed again on the display portion 12 with data entry of the one of the character candidates ("KA") in the character candidate image 12b being temporarily determined. Accordingly, after data entry of the one of the character candidates ("KA") in the character candidate image 12b is temporarily determined, the user can enter an additional (next) character following the one of the character candidates ("KA") the data entry of which is temporarily determined with the touch pen being in contact with the touch panel 11.

Also, in this embodiment, as discussed above, after one of the character candidates in the character candidate image 12b is selected, when the continuous user character input selection alternative in the conversion candidate image 12c is then selected by the user, the prediction conversion candidates in the conversion candidate image 12c is closed, the virtual keyboard 12a is displayed again in the area where the conversion candidate image 12c has been displayed. Accordingly, dissimilar to the case where both the conversion candidate image 12c and the virtual keyboard 12a are displayed on the display portion 12, the virtual keyboard 12a can be large in size when displayed on the display portion 12.

Also, in this embodiment, as discussed above, when the touch pen 101 is in continuous contact for a predetermined time period (not less than about 0.3 second and not more than about 0.5 second) with one of the keys of the virtual keyboard 12a, or a part corresponding to one of character candidates in the character candidate image 12b or conversion candidates of the conversion candidate image 12c on the touch panel 11, it is determined that the user selects the one of the keys of the virtual keyboard 12a, or the one of character candidates in the character candidate image 12b or conversion candidates of the conversion candidate image 12c. Accordingly, for example, in the slide movement in which the touch pen 101 slides on the touch panel 11, even if the touch pen 101 comes in momentary contact with a key of the virtual keyboard 12a or a part corresponding to one of character candidates in the character candidate image 12b or conversion candidates of the conversion candidate image 12c on the touch panel 11, it is possible to suppress a selection error in which the main control portion 51 wrongly determines that the user selects the key of the virtual keyboard 12a or the one of character candidates in the character candidate image 12b or conversion candidates in the conversion candidate image 12c, which comes in momentary contact with the touch pen 101.

Also, in this embodiment, as discussed above, some of the conversion candidates displayed in the conversion candidate image 12c can be highlighted in accordance with their priorities. Accordingly, for example, in the case where a higher priority prediction conversion candidate ("KAMERA") is highlighted, the user can easily find the higher priority prediction conversion candidate ("KAMERA").

Also, in this embodiment, as discussed above, the highlighted some of the prediction conversion candidates can be displayed in different character size and different font from other of the prediction conversion candidates displayed in the conversion candidate image 12c in accordance with the priorities of the prediction conversion candidates. Since a higher priority prediction conversion candidate ("KAMERA") is highlighted, the user can visually easily identify the higher priority prediction conversion candidate ("KAMERA").

Also, in this embodiment, as discussed above, the user can select one of the keys of the virtual keyboard 12a, or one of candidates in the character candidate image 12b or the conversion candidate image 12c by a touch of the touch pen 101 on the touch panel 11. Accordingly, the touch pen 101 allows the user to easily select one of the keys of the virtual keyboard 12a, or one of candidates in the character candidate image 12b or the conversion candidate image 12c.

It should be appreciated, however, that the embodiment described above is illustrative, and the invention is not specifically limited to description above. The invention is defined not by the foregoing description of the embodiment, but by the appended claims, their equivalents, and various modifications that can be made without departing from the scope of the invention as defined in the appended claims.

For example, in the foregoing embodiment, although the mobile phone has been illustratively described as the character input device according to the present invention, the present invention is not limited to this construction. For example, the present invention can be applied to MID (Mobile Internet Device), DPF (Digital Photo Frame), PND (Portable Navigation Device), remote control, and the like.

Although, in the foregoing embodiment, the touch panel has been illustratively to be operated through the touch pen, the present invention is not limited to this construction. For example, the touch panel may be operated by users' finger.

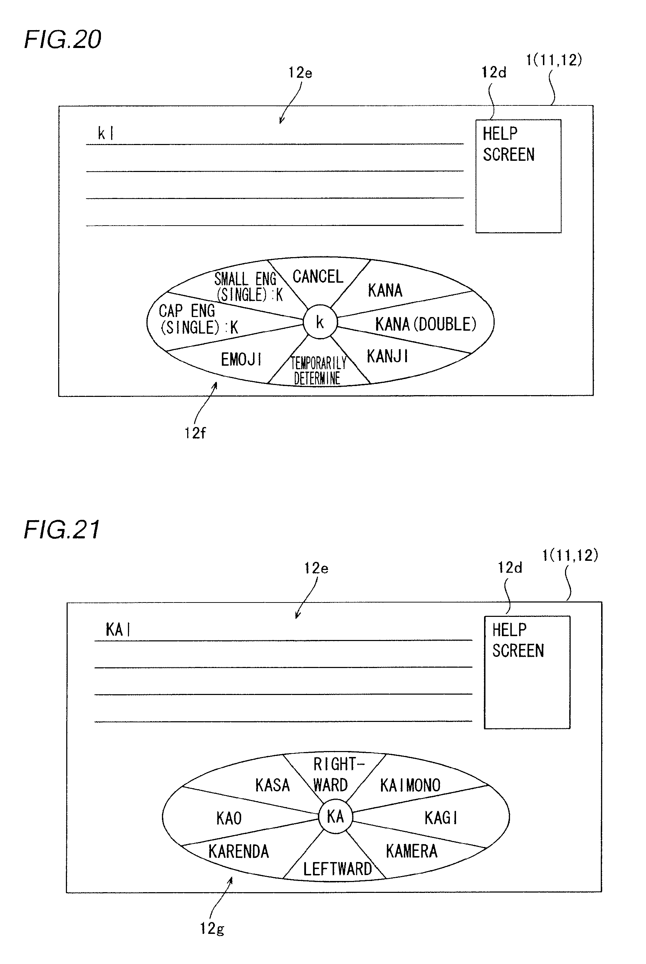

Although, in the foregoing embodiment, the character candidate image has been illustratively to indicate "KA", "KI", "KU", KE", "KO", English words (English candidates), and the like relating to "k" after "k" of the virtual keyboard is entered, the present invention is not limited to this construction. For example, after "k" of the virtual keyboard is entered, as shown in a display image 12f of Fig. 20 as a first modified character candidate image, when the display image 12f is displayed, the display image 12f can be divided into "KANA", "KANA (Double)" (here, KANA is indicated in katanaka character), "KANJI", "Temporarily Determine", "Emoji" (emoticon), "Cap Eng (Single): k", "Small Eng (Single): k", "Cancel", and the like.

In the foregoing embodiment, the conversion candidate image has been illustratively to indicate the conversion candidates including words starting with "KA" (e.g., "KAIMONO", "KAMERA", "KARENDA", "KAO" and "KASA"), "Continue Entry", "Previous", "Next" and the like. The "Continue Entry" allows the user to enter an additional character following the selected conversion candidate "KA". The "Previous" and "Next" allow the user to switch the display to previous and next conversion candidate sets, respectively. However, the present invention is not limited to this construction. For example, as shown in a conversion candidate image 12g of Fig. 21, "Rightward" and "Leftward" alternatives may be indicated in addition to words starting with "KA." In this construction, if "Leftward" is selected, conversion candidates, which are currently displayed in the conversion candidate image, are turned counterclockwise so that other conversion candidates are indicated one by one after "KAMERA". Also, if "Rightward" is selected, conversion candidates, which are currently displayed in the conversion candidate image, are turned clockwise so that other conversion candidates are indicated one by one before "KARENDA".

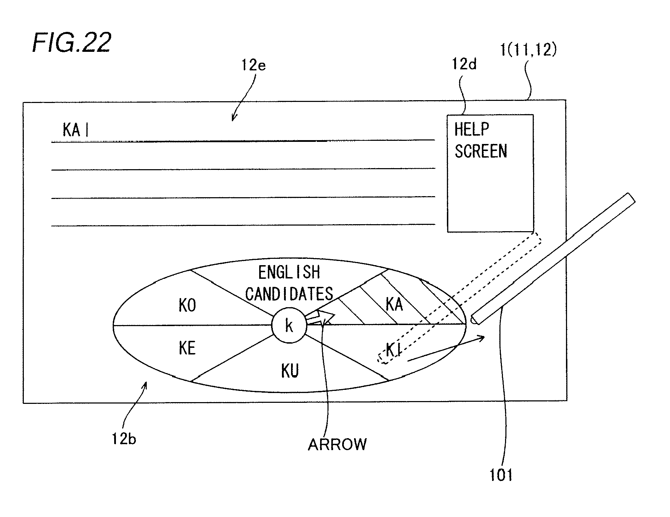

Also, in the foregoing embodiment, although when the pointer has been illustratively described to move in a direction where users slide the touch pen in the character candidate image, the present invention is not limited to this construction. For example, as shown in a second modified character candidate image of Fig. 22, in order to indicate a sliding direction where users slide the touch pen, an arrow may be displayed in the character candidate image.

Also, in the foregoing embodiment, although it has been illustratively described that, when the pointer is arranged on one of the character candidates in the character candidate image or one of the conversion candidates in the conversion candidate image, the one of the character candidate or the one of the conversion candidates is selected/determined, the present invention is not limited to this construction. For example, the pointer may not be displayed. In this case, when the touch pen or users' finger is arranged directly on one of the character candidates in the character candidate image or one of the conversion candidates in the conversion candidate image, the one of the character candidate or the one of the conversion candidates can be selected/determined.

## Claims

1. A character input device (100) comprising:
a display portion (12) that displays a data entry image;
a touch panel (11) that receives user input when said data entry image is displayed on said display portion; and
a control portion (51) that displays another data entry image in the area where said data entry image has been displayed, when a data code in said data entry image is selected by a touch as user input on said touch panel of users' finger or a touch panel operating portion (101), which comes in contact with the data code in said data entry image of said data entry image, the another data entry image relating to the data code selected by user input, wherein
when the users' finger or said touch panel operating portion slides on said touch panel with the users' finger or said touch panel operating portion being in contact with said touch panel, a data item in the another data entry image relating to said data code selected by user input is selected in accordance with the slide movement as user input, wherein
after the slide movement, when the users' finger or said touch panel operating portion is moved out of contact with said touch panel, said control portion determines the data entry of the selected data item in the another data entry image relating to said data code selected by user input.

2. The character input device according to claim 1, wherein said data entry images displayed on said display portion include a first data entry image (12a) that shows a virtual keyboard used for user character input, and a second data entry image (12b, 12c) that shows predicted conversion candidates relating to one of the keys of the virtual keyboard in the first data entry image selected by user input, wherein
when the users' finger or said touch panel operating portion slides on said touch panel with the users' finger or said touch panel operating portion being in contact with said touch panel, one of the predicted conversion candidates in said second data entry image is selected in accordance with the slide movement, wherein
after the slide movement, when the users' finger or said touch panel operating portion is moved out of contact with said touch panel, said control portion determines the data entry of the selected one of the predicted conversion candidates in said second data entry image.

3. The character input device according to claim 2, wherein when the users' finger or said touch panel operating portion slides on said touch panel with the users' finger or said touch panel operating portion being in contact with said touch panel, one of the keys of the virtual keyboard in said the first data entry image is selected in accordance with the slide movement, after this selection, said control portion closes said first data entry image and displays said second data entry image in the area where said first data entry image has been displayed.

4. The character input device according to claim 2, wherein said second data entry image is displayed in a circular or ellipse shape, wherein each of said predicted conversion candidates relating to one of the keys of the virtual keyboard in the first data entry image selected by user input is shown in corresponding one of a plurality of divided parts of said circular-shaped or ellipse-shaped second data entry image.

5. The character input device according to claim 4, wherein a part in the vicinity of the center of said circular-shaped or ellipse-shaped second data entry image shows one of the keys of the virtual keyboard in the first data entry image selected by user input, wherein
each of said predicted conversion candidates relating to the one of the keys of the virtual keyboard in the first data entry image selected by user input is shown in corresponding one of the plurality of divided parts, which are arranged on the outer periphery of the part in the vicinity of the center of said circular-shaped or ellipse-shaped second data entry image where the one of the keys of the virtual keyboard is displayed.

6. The character input device according to claim 2, wherein when said second data entry image is displayed on said display portion, said control portion displays a pointer for selecting one of the predicted conversion candidates in said second data entry image on said display portion.

7. The character input device according to claim 2, wherein when one of the keys of the virtual keyboard in said the first data entry image is selected by user input, or when one of the predicted conversion candidates in said second data entry image relating to one of the keys in said virtual keyboard on said first data entry image is selected by user input, said display portion displays, in an output screen, the one of the keys or the predicted conversion candidates selected by user input.

8. The character input device according to claim 2, wherein said second data entry image includes a first selection image that shows predicted conversion candidates relating to one of the keys of said virtual keyboard in said first data entry image selected by user input, and a second selection image that shows predicted conversion candidates relating to one of the predicted conversion candidates in said first selection image selected by user input, wherein
when the users' finger or said touch panel operating portion slides on said touch panel with the users' finger or said touch panel operating portion being in contact with said touch panel, in said first selection image, one of the predicted conversion candidates is selected in accordance with the slide movement, wherein
after this selection, said control portion switches the display from said first selection image to said second selection image.

9. The character input device according to claim 8, wherein said second selection image shows, in addition to the predicted conversion candidates relating to one of the predicted conversion candidates in said first selection image selected by user input, a continuous user character input selection alternative that provides continuous user character input, wherein
when the users' finger or said touch panel operating portion slides on said touch panel with the users' finger or said touch panel operating portion being in contact with said touch panel, in said second selection image, said control portion allows user input to select one of the predicted conversion candidates relating to one of the predicted conversion candidates in said first selection image or the continuous user character input selection alternative.

10. The character input device according to claim 9, wherein when the users' finger or said touch panel operating portion slides on said touch panel with the users' finger or said touch panel operating portion being in contact with said touch panel, in said first selection image of said second data entry image, one of the predicted conversion candidates is selected in accordance with the slide movement, wherein
after this selection, if the users' finger or said touch panel operating portion slides on said touch panel with the users' finger or said touch panel operating portion being in contact with said touch panel, when the continuous user character input selection alternative is then selected in accordance with the slide movement as user input, said control portion displays the virtual keyboard of said first data entry image again on said display portion with the data entry of the selected one of the predicted conversion candidates in said first selection image of said second data entry image being temporarily determined.

11. The character input device according to claim 10, wherein after one of the prediction conversion candidates in the first selection image of said second data entry image is selected, when the continuous user character input selection alternative in said second selection image is then selected, said control portion closes the display of the prediction conversion candidates in said second data entry image, and then displays the virtual keyboard of said first data entry image again in the area where said second data entry image has been displayed.

12. The character input device according to claim 2, wherein when the users' finger or said touch panel operating portion is in continuous contact for a predetermined time period with one of the keys of the virtual keyboard in said first data entry image or a part corresponding to one of the prediction conversion candidates in said second data entry image on said touch panel, said control portion determines that the one of the keys of the virtual keyboard in said first data entry image or the one of the prediction conversion candidates in said second data entry image is selected by user input.

13. The character input device according to claim 2, wherein said control portion highlights one or more of the prediction conversion candidates displayed in said second data entry image in accordance with the priorities of the prediction conversion candidates.

14. The character input device according to claim 13, wherein said control portion displays the highlighted one or more of the prediction conversion candidates in at least one of different character size and different font from other of the prediction conversion candidates displayed in said second data entry image in accordance with the priorities of the prediction conversion candidates.

15. The character input device according to claim 1, wherein said touch panel operating portion includes a touch pen, wherein users can select the data code in said data entry image by a touch of said touch pen on said touch panel.
